# EUROPEAN PATENT APPLICATION

(11) **EP 3 579 403 A1**
(43) Date of publication of application: **11.12.2019**
(21) Application number: 19179187.0
(22) Date of filing: 07.06.2019
(51) Int. Cl.: H02P 27/08, H02M 7/48

(54) **CONTROL FOR ELECTRIC POWER STEERING**

(30) Priority: 07.06.2018 GB 201809400
(71) Applicant: TRW Limited, Solihull, West Midlands B90 4AX (GB)
(72) Inventor: Rice, Nathanael, Nottingham, NG12 4AB (GB); Kudanowski, Maciej, Solihull, B93 9RA (GB); Terdy, Tamas, Birmingham, B28 0PP (GB)
(74) Representative: Tranter, Andrew David

(57) **Abstract**

A motor drive stage, particularly for an electric power steering (EPS) system, comprises at least one inverter bridge (120) connected to a multi-phase motor, wherein the inverter bridge comprises a Z-source or quasi-Z-source inverter bridge having a plurality of wide band gap semiconductor switching elements (S1-S6) each associated with a phase of the motor.

## Description

### Technical Field

The present invention relates to motor drive stages, in particular for an electric power steering (EPS) system.

### Background to the invention

Electric Power Steering (EPS) systems are well known in the prior art. In one known system the power generated by an electric motor is used to generate an assistance torque in the steering column in the same direction as a detected demand torque generated by a driver of the vehicle turning a steering wheel. The EPS systems may also enable non-driver applied steering inputs to be made, such as required during lane guidance and autonomous or semi-autonomous steering of the vehicle.

Although many different motor designs can be employed, it is common practice to provide a DC synchronous motor to apply the assistance, torque. A typical DC synchronous motor has multiple phases which are each supplied with a sinusoidal voltage waveform. For a three phase motor, the sinusoids are all chosen to be 120 degrees out of phase with any other sinusoid. By varying the magnitude of the sinusoid applied to each phase the speed and position of the motor rotor can be precisely controlled.

Vehicles do not inherently include a source of AC voltage, so to drive the motor a motor drive stage known as an inverter is used. The function of the inverter is to convert a DC voltage present across its two input nodes into the required AC voltages for each phase. A typical inverter comprises a plurality of semiconductor switching elements arranged as a bridge which control the current delivered to the motor and thus the rotation of the motor. Synthesis of the sinusoidal waveforms is achieved by applying pulse width modulated waveforms (PWM) to the semiconductor switching elements.

An object of the present invention is to provide an improved motor drive stage for use, in particular, in an EPS system.

### Summary of the Invention

In accordance with a first aspect of the invention, there is a motor drive stage, particularly suitable for use in an electric power steering (EPS) system, comprising: at least one inverter bridges connected to a multi-phase motor, wherein the inverter bridge comprises a plurality of switching elements each associated with a phase of the motor,
characterised in that the inverter bridge comprises a Z-source or quasi-Z-source inverter bridge and in that the switching elements each comprise wide band gap semiconductor devices.

The wide band gap semiconductor devices may comprise Gallium Nitride (GaN) or Silicon Carbide FET devices.

The Z-source inverter bridge may comprise a plurality of pairs of switching elements, each pair connected in series between a high side supply rail and a low side supply rail, an output voltage for a respective motor phase being taken off at a point between the two elements of each pair of elements.

The Z-source inverter bridge may comprise an inductive network comprising at least two inductors LI, L2 and two capacitors C1, C2 connected in a two port network between the positive DC supply and ground at the two input nodes and to the high side supply rail and the low side supply rail at the two output nodes of the z-source inverter bridge, and a further switching element, the further switching element comprising a wide band gap semiconductor device.

The two inductors LI, L2 may be serially connected between the input and output ports and the two capacitors may be diagonally connected.

Of course, by inductor we may mean a plurality of inductive devices connected in series or parallel to give one overall inductance. Similarly, by capacitor we may mean a plurality of capacitors connected in series or connected in parallel to give an overall capacitance.

In an alternative, the Z-source inverter bridge may have be a quasi- Z-source inverter topology. This has the same number of inductors and capacitors but arranged in a different topology between the two input nodes and the high side supply rail and low side supply rail.

The input nodes may be connected to a positive DC supply voltage and to a ground respectively.

The further switching device may be connected in series between the input node that is in use connected to the positive DC supply and the high side supply rail. One of the two inductors may be provided in series between the further switching device and the high side supply rail.

In each arrangement, the inverter may be operated in an active mode or in a shoot through mode, and the drive stage may include a controller which controls the mode of operation by modulation of the further switching element and the switching elements of the bridge. The skilled person will be familiar with control strategies for operation of the inverter in each of the two modes.

The motor drive stage may form a part of an EPS system.

The EPS system may include a controller which generates pulse width modulated (PWM) drive signals for each of the switching elements of the bridge. The PWM signals may have a switching frequency of at least 1Mhz, or 2Mhz or higher, although the invention is applicable to lower frequencies too such as 200kHz or lower. Wide band gap devices such as GaN FETs, due to their lateral structure and low gate capacitance can be switched much faster than MOSFETs, for example over 100 times as fast, whilst maintaining comparable switching losses to the prior art MOSFETS when switching at 20kHz. The increased PWM frequency which is facilitated by the GaN devices means that energy needs to be stored in the Z-Source network for a shorter period of time and therefore Inductance and Capacitance values can be decreased.

The control of the inverter may be arranged such that the voltage present at the high side of the bridge exceeds the motor back EMF.

The EPS system may include a motor having a plurality of phases, each phase connected to one of the pairs of switching elements of the inverter bridge.

The motor may comprise a DC synchronous multi-phase motor.

The applicant has appreciated that the use of wide band gap FETs enables very high PWM frequencies to be achieved, which in turn enables a Z-source inverter to be a feasible choice for an automotive application because such applications are typically very much space and cost constrained. The invention allows the size of the inductive network elements, the capacitors and inductors, to be relatively small as they do not need to store as much energy as is the case with lower PWM frequencies. This reduces the cost compared with prior art MOSFET bridges that use silicon MOSFET devices. It also allows a Z-source topology to be packaged in a similar space to simpler circuit topologies operating at lower frequencies.

The use of a Z-source topology is beneficial as it enables the high side voltage - sometimes referred to as a the DC link voltage- to be tightly controlled and in particular for the voltage to be boosted above the DC supply voltage at times where the motor is running at high RPM and generating relatively high back EMF which would otherwise be above the supply voltage. With a conventional Voltage source inverter (VSI) this situation must be avoided, either by limiting motor RPM or field weakening to reduce back EMF although this reduces the efficiency of the motor and results in high heat dissipation within the motor and the drive stage. The arrangement proposed by the applicant ameliorates this problem and may allow the motor and drive stage to operate cooler and using smaller passive components, e.g. smaller capacitors and inductors due to the ability to run at higher switching speeds afforded by the use of wide band FETs.

Features which are described in the context of separate aspects and embodiments of the invention may be used together and/or be interchangeable. Similarly, where features are, for brevity, described in the context of a single embodiment, these may also be provided separately or in any suitable sub-combination. Features described in connection with the device may have corresponding features definable with respect to the method(s) and the computer program and these embodiments are specifically envisaged.

Where reference is made to an "event" or "fault condition" or the like, this is to be construed broadly. It should be understood that this covers "internal" failures/faults e.g. a short circuit. It also covers "external" events that may cause a FET to be subjected to a high back-EMF e.g. the EPS motor being externally rotated (by a service engineer) at high speed during garage servicing of a vehicle and thus acting as a generator.

### Brief description of drawings

Embodiments of the invention will now be described with reference to the Figures of the accompanying drawings in which:
**Figures 1** show a first embodiment of a dual redundant EPS system that includes a motor drive stage in accordance with the invention; and
**Figure 2** shows a first embodiment of the motor drive stage in accordance with the invention; and
**Figure 3** shows a second embodiment of the motor drive stage in accordance with the invention.

### Detailed description of embodiments of the invention

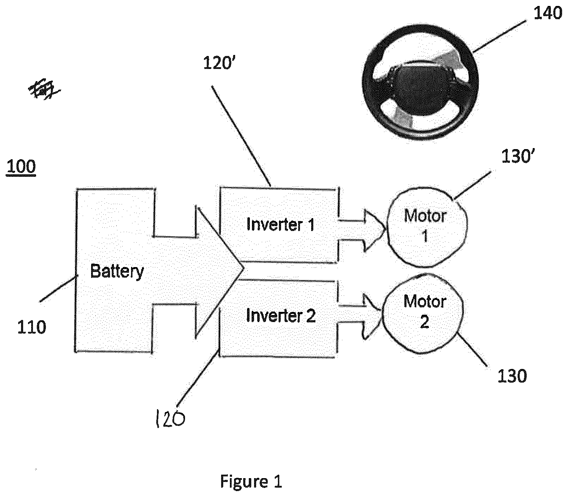

Figures 1 represent a first embodiment of a EPS system 100 in accordance with the present invention. The example shown is for an advanced two lane system, although this is exemplary only and the invention may be applied to EPS systems have only one lane or that use three or more lanes.

The EPS system comprises first 120 and second 120' inverter bridges connected to and configured to drive first 130 and second 130' motors, respectively. Each motor comprises a set of phase windings, in this example forming three phases connected in a star topology. The first bridge and motor form one lane, and the second bridge and motor form a second lane. The two lanes are identical in this example, of the construction of only a first lane will now be described. Each lane can be considered to define a drive stage circuit for the respective motor.

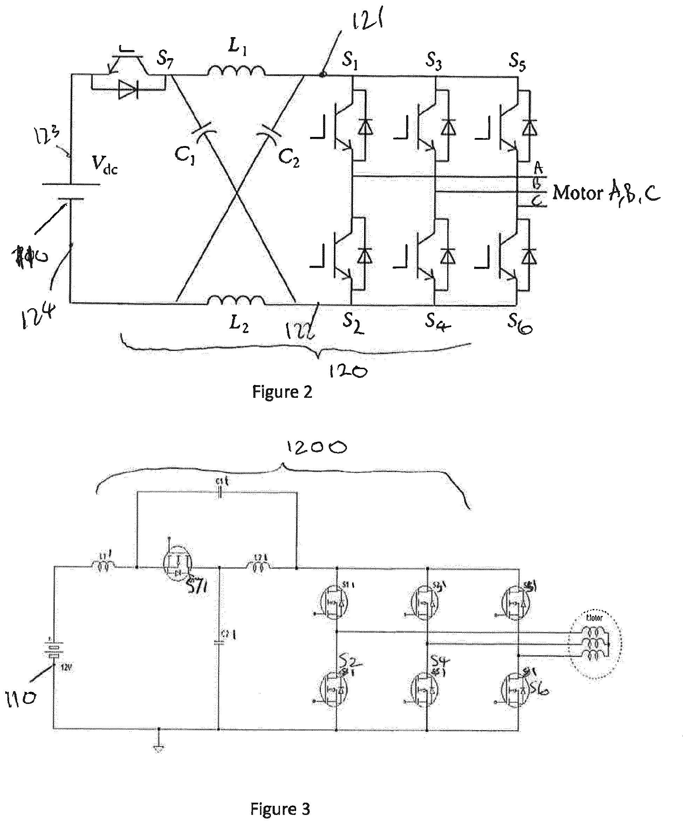

Figure 2 shows a first embodiment of a drive stage for the EPS system of Figure 1. A DC voltage is applied by a battery 110 between a supply rail and a ground rail and is connected to the 3-phase motor 130 via an inverter 120. The inverter 120 comprises three parallel arms (A, B, C), each of which has a pair of wide band gap GaN FETs S1, S2, S3, S4, S5, S6 connected in series between a high side rail 121 and a low side rail 122. The motor phases A, B, C are connected to each other in a star configuration and branch off from between a respective pair of GaN FETs. As such, GaN FETs S1, S2 are connected to a first phase A of the motor 130, GaN FETs S3, S4 are connected to a second phase B of the motor 130, and GaN FETs S5, S6 are connected to a third phase C of the motor 130. The pairs of GaN FETs associated with each phase (arms A, B, C) are connected in parallel to each other and to the battery 110.

The GaN FETS are also arranged in two groups with FETS S1,S3 and S5 on the "high" side of the inverter 120 and FETS S2, S4, S6 on the "low" side of the inverter 120. The terms "high" and "low" are labels for ease of reference only. The gate of each FET S1...S6 is connected to a gate driver to switch each FET ON or OFF. Each gate driver received control signals from a controller (not shown).

In use, the controller applies voltage signals to the gate of each FET to switch them ON and OFF rapidly in a predefined sequence, thus controlling the voltage applied to each phase of the motor and current flowing through the windings. This in turn controls the strength and orientation of the magnetic field produced by the windings, and hence the torque and speed of the motor. By using a sufficiently rapid pulse width modulation (PWM) switching pattern, a phase drive waveform can be applied that approximates the ideal sinusoidal waveform required to rotate the motor smoothly. This applies for both bridges 120, 120' in normal operation, i.e. all FETs of both bridges 120, 120' are turned ON and OFF in a controlled manner during normal operation. As will be apparent, the use of wide band-gap switching devices allows for very rapid ON-OFF transitions which in turn allows for a relatively high PWM frequency to be used of around 2MHz or higher, something which cannot be achieved using MOSFET devices.

When the steering wheel 140 of a vehicle (not shown) is operated by a driver, a demand torque is detected by the system. The controller determines from this torque demand a current demand for each of the two motors 130, 130', and appropriate PWM gate signals are applied to the switches to cause the motor to generate an assistance torque, dependent on the demand torque and vehicle speed, which acts on the steering rack to assist steering the vehicle.

The inverter bridge of Figure 2 comprises a Z-source inverter topology in which two inductors LI, L2 and two capacitors C1, C2 are connected between the high side supply rail and low side supply rail of the bridge and the positive side 123 and ground sides 124 of the DC supply. The two capacitors are connected diagonally to provide a path from the positive DC supply to the low side, and from the ground of the supply to the high side, and the two inductors are connected inline, i.e. from positive to high side and from ground to the low side. A further wide band gap FET is provided in series with the inductor L1 between the positive DC supply and that inductor.

In addition, a further switching element is provided S7. This is located between the DC supply voltage and the inductor network, i.e. the side of the switching element away from the DC supply voltage is connected to a node from which the diagonal capacitor C1 and the inline inductor L1 are also connected. This switch may in use be turned-OFF during shoot-through state of the bridge so the bridge switches don't short-circuit capacitors C1 and C2 and the Vdc supply.

Figure 3 shows an alternative arrangement of a drive stage 1200 in which the Z-source inverter topology has been arranged to form a so called Quasi-Z-source inverter. In this arrangement, the GaN FETS within the bridge S11,S21,S31,S41, S51 and S61 are referenced to the ground line, making the drive of the MOSFETS potentially easier but the functionality is essentially the same. As before, there are two capacitors C11 and C21, and two inductors L11, L21 and a further wide band gap semiconductor device S71. However, in this embodiment the two inductors are arranged in series between the positive DC supply and the high side of the bridge with the switching element in series between them. One of the capacitors is connected from a point located between the switching element and the inductor that is closest the high side of the bridge to the ground line. The other inductor is connected in parallel from a point located between the switching element and the inductor closest to the DC supply to the high side of the bridge.

From reading the present disclosure, other variations and modifications will be apparent to the skilled person. Such variations and modifications may involve equivalent and other features which are already known in the art, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and any reference signs in the claims shall not be construed as limiting the scope of the claims.

## Claims

1. A motor drive stage, particularly for an electric power steering (EPS) system, comprising: at least one inverter bridges connected to a multi-phase motor, wherein the inverter bridge comprises a plurality of switching elements each associated with a phase of the motor,
**characterised in that** the inverter bridge comprises a Z-source or quasi-Z-source inverter bridge and **in that** the switching elements each comprise wide band gap semiconductor devices.

2. A motor drive stage according to claim 1 in which the wide band gap semiconductor devices comprise Gallium Nitride (GaN) or Silicon Carbide FET devices.

3. A motor drive stage according to claim 1 or claim 2 in which the Z-source inverter bridge comprises a plurality of pairs of switching elements, each pair connected in series between a high side supply rail and a low side supply rail, an output voltage for a respective motor phase being taken off at a point between the two elements of each pair of elements.

4. A motor drive stage according to any preceding claim in which the Z-source inverter bridge comprises an inductive network comprising at least two inductors LI, L2 and two capacitors C1, C2 connected in a two port network between the positive DC supply and ground at the two input nodes and to the high side supply rail and the low side supply rail at the two output nodes of the z-source inverter bridge, and a further switching element, the further switching element comprising a wide band gap semiconductor device.

5. A motor drive stage according to claim 4 in which the two inductors LI, L2 are serially connected between the input and output ports and the two capacitors are diagonally connected.

6. A motor drive stage according to ay preceding claim in which the Z-source inverter bridge has a quasi- Z-source inverter topology.

7. A motor drive stage according to any preceding claim which forms a part of an EPS system that includes a controller which generates pulse width modulated (PWM) drive signals for each of the switching elements of the bridge, and in which the PWM signals have a switching frequency of at least 200kHz, or at least 1Mhz, or 2Mhz or higher.
